(19) **Europäisches Patentamt**
**European Patent Office**
**Office européen des brevets**

(11) **EP 2 980 027 A1**

(12) **EUROPEAN PATENT APPLICATION**

(43) Date of publication:
**03.02.2016 Bulletin 2016/05**

(51) Int Cl.:
**C02F 1/469** $^{(2006.01)}$

(21) Application number: **14178939.6**

(22) Date of filing: **29.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Voltea B.V.**
**2171 AE Sassenheim (NL)**

(72) Inventors:
- **van der Wal, Albert**
**2341 LP Oegstgeest (NL)**
- **van Limpt, Bart**
**2318 AX Leiden (NL)**

(74) Representative: **EP&C**
**P.O. Box 3241**
**2280 GE Rijswijk (NL)**

(54) **Operating an apparatus for removal of ions with warm and cold water**

(57)    The invention relates to a method of operating an apparatus for removal of ions provided with a capacitor. The method comprising during an ion removal mode allowing warm water to flow in between a first and a second electrode of the capacitor; charging the capacitor; and, removing ions from the warm water by attracting the ions to the first and second electrode. During a regeneration mode: allowing relatively cold water to flow in between the first and the second electrode of the capacitor; de-charging the capacitor; and, releasing ions from the electrodes in the cold water in between the electrodes.

EP 2 980 027 A1

**Description**

**FIELD**

The invention relates to a method of operating an apparatus for removal of ions, the apparatus comprising a capacitor, the method comprising during an ion removal mode:

> allowing water to flow in between a first and a second electrode of the capacitor;
> charging the capacitor; and,
> removing ions from the water by attracting the ions to the first and second electrode; and,

during a regeneration mode:

> allowing water to flow in between the first and the second electrode of the capacitor;
> de-charging the capacitor; and,
> releasing ions from the electrodes in the water in between the electrodes.

**BACKGROUND**

In recent years one has become increasingly aware of the impact of human activities on the environment and the negative consequences this may have. Ways to reduce, reuse and recycle resources are becoming more important. In particular, clean water is becoming a scarce commodity. Therefore, various methods and devices for purifying water have been published.

A method for water purification is by capacitive deionisation, using an apparatus provided with a flow through capacitor (FTC) for removal of ions in water. The FTC functions as an electrically regenerable cell for capacitive deionisation. By charging electrodes, ions are removed from an electrolyte and are held in electric double layers at the electrodes. The electrodes can be (partially) electrically regenerated to desorb such previously removed ions without adding chemicals.

The apparatus for removal of ions comprises one or more pairs of spaced apart electrodes (each pair of electrodes comprising a cathode and an anode) and a spacer, separating the electrodes and allowing water to flow between the electrodes. The electrodes are provided with current collectors or backing layers and a high surface area material, such as e.g. carbon, which may be used to store removed ions. The current collectors may be in direct contact with the high surface area material. Current collectors are electrically conductive and transport charge in and out of the electrodes and into the high surface area material.

A charge barrier may be placed adjacent to an electrode of the flow-through capacitor. The term charge barrier refers to a layer of material which is permeable or semipermeable for ions and is capable of holding a chemical or an electrical charge. Ions with opposite charge as the charge barrier charge can pass the charge barrier material, whereas ions of similar charge as the charge of the charge barrier cannot pass or only partially pass the charge barrier material. Ions of similar charge as the charge barrier material are therefore contained or trapped either in e.g. the electrode compartment and/or in the spacer compartment. The charge barrier is often made from an ion exchange material. A charge barrier may allow an increase in ionic efficiency, which in turn allows energy efficient ion removal.

During an ion removal mode in which water is allowed to flow in between a first and a second electrode of the capacitor, the capacitor is charged and ions are removed from the water by attracting the ions to the first and second electrode it is important that as much ions as possible are attracted to the electrodes. Further, during a regeneration mode in which ions are released from the electrodes in the water in between the electrodes it is important that no scaling of the ions inside the apparatus occurs.

**SUMMARY**

It is an objective of the invention to provide an improved method of operating an apparatus for removal of ions.

Accordingly there is provided a method of operating an apparatus for removal of ions, the apparatus comprising a capacitor the method comprising during an ion removal mode:

> allowing warm water having a first temperature to flow in between a first and a second electrode of the capacitor;
> charging the capacitor; and,
> removing ions from the warm water by attracting the ions to the first and
> second electrode; and,

during a regeneration mode:

allowing relatively cold water having a second temperature lower than the first temperature to flow in between the first and the second electrode of the capacitor;
de-charging the capacitor; and,
releasing ions from the electrodes into the relatively cold water in between the electrodes.

By allowing warm water having a first temperature to flow in between the first and the second electrode of the capacitor during an ion removal mode the efficiency of the flow through capacitor is improved. The risk on scaling of ions in the apparatus during a regeneration mode may be reduced by regenerating with relatively cold water.

According to an embodiment the relatively cold water may be at or below room temperature.

Advantageously, by using relatively cold water (instead of warm water) during the regeneration mode, no warm water is wasted during regeneration, which means that the warm water is available for the desired application and/or can be kept in circulation and therefore less make-up water needs to be heated, which results in an overall energy saving.

According to an embodiment the relatively warm water is at a temperature higher than room temperature, preferably higher than 30°C or even higher than 50 °C.

At elevated temperatures, the electrical resistance of a Flow Through Capacitor FTC decreases and therefore at a given voltage difference over the first and second electrode the electrical current and hence the ion flux increases. The deionization efficiency therefore increases at higher temperatures of the water during the purification

According to an embodiment the method comprises switching an inlet valve to relatively cold water during the regeneration mode to allow relatively cold water to flow in between the first and the second electrode of the capacitor.

The inlet valve may open up a water flow from for example tap water or any other water source to provide the relatively cold water to the capacitor during the regeneration mode.

According to an embodiment the method comprises switching the inlet valve to relatively warm water during the ion removal mode to allow relatively warm water to flow in between the first and the second electrode of the capacitor.

The inlet valve may switch to warm water so as to remove the ions in the warm water with the capacitor. The warm water source may be heated water e.g. swimming pool water, laundry water, dish wash or ware-wash water. The warm water may also be heated tap water.

According to an embodiment the method comprises heating the water during an ion removal mode to allow relatively warm water to flow in between the first and the second electrode of the capacitor. The water may be heated by a heater.

According to an embodiment the method comprises switching an outlet valve to a purified water outlet during the ion removal mode.

The water may via a purified water outlet be delivered to an appliance which may benefit from warm deionized water.

According to an embodiment the method comprises switching an outlet valve to a waste water outlet during the regeneration mode.

The water with an increased content of ions may be flushed away via a waste water outlet.

According to an embodiment the method comprises measuring a temperature of the water before the water flows through the outlet valve.

The temperature of the water may indicate whether de-ionized (warm) water or waste (cold) water is produced by the capacitor.

According to an embodiment the method comprises controlling the valve to direct relatively warm water to a purified water outlet and relatively cold water to a waste water output.

The de-ionized (warm) water may be lead to the purified water outlet and the waste (cold) water may be lead to the waste water outlet by the outlet valve on the basis of the temperature of the water from the capacitor.

According to an embodiment the method comprises controlling a regeneration mode only to occur if the measured water temperature is relatively cold.

By using relatively cold water, instead of warm water, the risk of scaling in the FTC during regeneration of the electrodes may be reduced. As a result the concentration of scaling ions during electrode regeneration may be increased, which in turn may lead to a higher water recovery. In this way more of the treated water will be purified and the volume of waste water will be reduced.

According to a further embodiment the invention relates to an apparatus for removal of ions from water, the apparatus being provided with:

a water inlet for letting water in the apparatus;
a water outlet for letting water out of the apparatus;
a capacitor; and,

a spacer for separating a first and a second electrode of the capacitor and allowing water to flow in between the electrodes; wherein the apparatus comprises a water temperature controller constructed and arranged to control during a regeneration mode - in which ions previously attracted to the capacitor are released in a waste water stream - the temperature of the water to be lower than during an ion removal mode - in which ions are attracted to the capacitor -.

By allowing warm water having a first temperature to flow in between a first and a second electrode of the capacitor during an ion removal mode the efficiency of the flow through capacitor is improved. The risk of scaling of ions in the apparatus during a regeneration mode may be reduced by regenerating with relatively cold water.

According to an embodiment the water inlet comprises a relatively warm water inlet and a relatively cold water inlet and the temperature controller comprises an inlet valve to switch between water from the relatively warm water inlet and the relatively cold water inlet before the water reaches the capacitor.

The inlet valve may open up a water flow, for example from tap water or any other water source to provide the relatively cold water to the capacitor during the regeneration mode and the inlet valve may switch to a relatively warm water inlet with warm water so as to remove the ions in the warm water with the capacitor.

According to an embodiment the temperature controller comprises a heater to control the heating of the water before or during an ion removal mode.

This way, the temperature of the water before it reaches the capacitor will be higher than during a regeneration mode.

The water may be heated by the heater such that a connection with warm water or any other warm water source may be omitted in the apparatus. The apparatus may be kept very compact and multifunctional in this way, combining heating and de-ionization functions.

According to an embodiment the outlet comprises a purified water outlet and a waste water outlet and the apparatus comprises an outlet valve to switch from the purified water outlet to the waste water output and vice versa.

The water may via a purified water outlet be delivered to an appliance which may benefit from warm deionized water. The relatively cold water with an increased content of ions may be flushed away via a waste water outlet.

According to an embodiment the apparatus comprises a temperature sensor to measure a temperature of the water just after the capacitor.

The temperature of the water may indicate whether de-ionized (warm) water or waste (cold) water is produced by the capacitor. The de-ionized (warm) water may be lead to the purified water outlet and the waste (cold) water may be lead to the waste water outlet by the outlet valve on the basis of the temperature of the water from the capacitor.

According to a further embodiment the invention relates to a laundry or dishwasher appliance comprising an apparatus for removal of ions from water.

Laundry or dishwasher appliances may use warm water and may benefit from deionized water in the cleaning process.

**Brief description of the figures**

Embodiments of the invention will be described, by way of example only, with reference to the accompanying schematic drawings in which corresponding reference symbols indicate corresponding parts, and in which:

Figure 1 shows an ion removal apparatus for removing ions with a flow through capacitor according to a first embodiment;
Figure 2 depicts a graph of the relative performance gain in terms of flow of a flow through capacitor system increasing as a function of the temperature;
Figure 3 depicts an ion removal apparatus provided with a boiler according to a second embodiment;
Figure 4 shows the required TDS reduction to maintain the scaling susceptibility at increased temperature;
Figure 5 depicts the apparatus of figure 3 where the hot water is recirculated over the ion removal apparatus
Figure 6 depicts regeneration of the ion removal apparatus of figure 3;
Figure 7 shows an expanded version of the ion removal apparatus of figure 3;
Figure 8 depicts a top view of an FTC module in the housing of the apparatus for removal of ions with reduced "dead space" according to a third embodiment;
Figure 9 depicts a snug fit for normal (not floating electrodes) FTC module according to a fourth embodiment.
Figure 10 depicts using a filler to reduce the "dead volume" in a normal FTC module according to a sixth embodiment; and,
Figure 11 shows cross flow operation for both a normal module configuration (left) as for a floating stack configuration (right) according to a seventh embodiment.

**Detailed description of the invention**

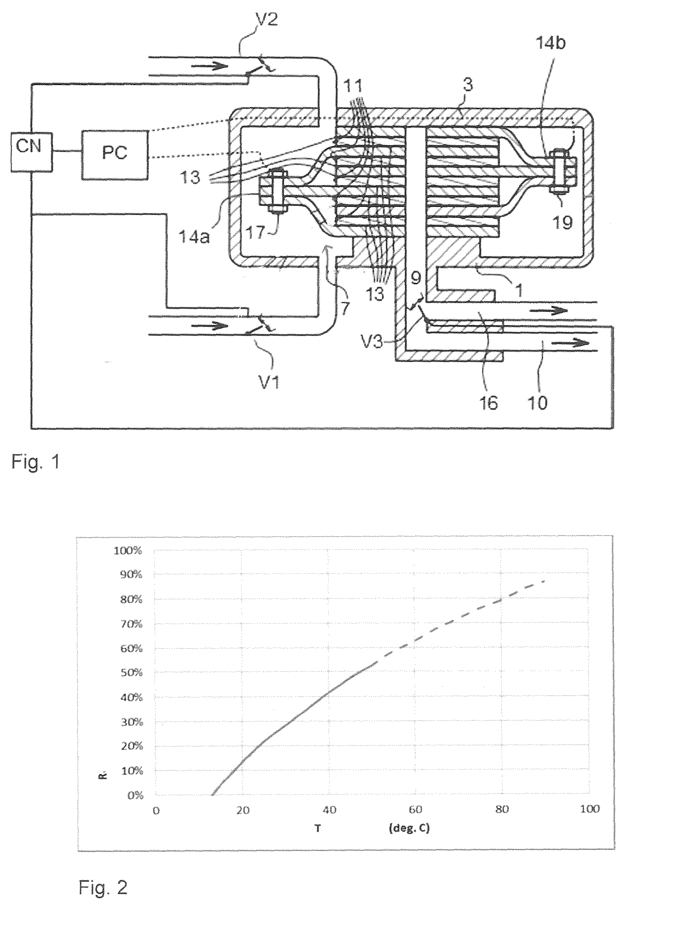

Figure 1 shows an ion removal apparatus for removing ions with a flow through capacitor (FTC). The ion removal apparatus has a housing comprising a first housing part 1 and a second housing part 3 made of a relatively hard material e.g. a hard plastic. By pressing the first and second housing parts on each other, for example with a bolt and nut (not shown) the housing is made water tight.

The apparatus may be connected via inlet valve V1 and water inlet 7 (e.g. an inlet chamber) to a relatively cold water inlet and via inlet valve V2 and water inlet 7 to a relatively warm water inlet. The inlet valves V1, V2 may be considered as a temperature controller for the water in the water inlet 7. The outlet 9 may be provided with an outlet valve V3 to direct the flow of water from the outlet 9 to a purified water outlet 10 or to direct the flow of water to a waste water output 16.

During ion removal of the water, the water will flow from the inlet 7 to the outlet 9 through the spacers 11 which separates a first electrode and a second electrode of the flow through capacitor from each other. Between the spacer and the electrodes a membrane 13 may be provided.

The first current collectors 14a (of the first electrodes) may be clamped by first connector 17 and may be connected to a first pole of a power converter PC. The second current collectors 14b (of the second electrode) may be clamped by second connector 19 and may be connected to a second pole of the power converter PC. By creating an electrical potential difference between the first and second electrode by the power converter PC, for example by applying a positive voltage to the first electrode (the anode) and a negative voltage to the second electrode (cathode) the anions of the water flowing through the spacer 11 may be attracted to the first electrode and the cations may be attracted to the second electrode. In this way the ions (anions and cations) may be removed from the water flowing through the spacer 11 during an ion removal mode.

Relatively warm water may be provided to the water inlet 7 via the inlet valve V2 from the relatively warm water inlet. The relatively warm water may be deionized by the flow through capacitor and the relatively warm purified water may be discharged to the purified water outlet 10 by the valve V3. By allowing warm water having a first temperature to flow in between a first and a second electrode of the capacitor during an ion removal mode the efficiency of the flow through capacitor is improved.

Once the electrodes are saturated with ions the electrodes may be regenerated, whereby the ions will be released in the water in the spacer 11 in between the electrodes by reversing the current between the electrodes. Relatively cold water may be provided to the water inlet 7 via the inlet valve V1 from the relatively cold water inlet during regeneration. The inlet valve may open up a water flow from plain tap water to provide the relatively cold water to the capacitor during the regeneration mode. The risk on scaling of ions in the apparatus during a regeneration mode may be reduced by regenerating with relatively cold water. The water in the spacer with the increased ion content may be flushed away with the relatively cold water by closing the purified water outlet 10 with valve 12 under control of the controller CN and opening the waste water outlet 16. Once most ions are released from the electrodes and the water with increased ion content is flushed away via the waste water outlet 16 the electrodes are regenerated and may be used again for attracting ions. Flushing with relatively cold water also reduces the overall energy consumption, because the warm water will not end up in the waste stream, since substantially all of the warm water is being purified.

A power converter PC under control of the controller CN may be used to convert the power from the power source PS to the right electrical potential. The electrical potential differences between the anode and the cathode are rather low, for example lower than 3 Volt, preferably lower than 2 Volt, even more preferably lower than 1.5 Volts. It is important that the electrical resistance of the electrical circuit is low. For this purpose, current collectors 14a which are in direct contact with the first electrodes are connected to each other with the first connector 17 and the current collectors 14b which are in direct contact with the second electrodes are connected to each other with the second connector 19. The current collectors 14a and 14b may be made substantially metal free to keep them corrosion free in the wet interior of the housing and at the same time cheap enough for mass production.

The electrodes may be produced from a substantially metal free electrically conductive high surface area material, such as activated carbon, carbon black, carbon aerogels, carbon nano fibres, carbon nano tubes, graphene or mixtures thereof, which are placed on both sides of the current collector. The high surface area layer is a layer with a high surface area in square meter per weight of material, for example more than 500 square meter per gram of material. This set-up may ensure that the capacitor works as an electrical double layer capacitor with sufficient ion storage capacity. The overall surface area of even a thin layer of such a material is many times larger than a traditional material like aluminum or stainless steel, allowing many more charged species such as ions to be stored in the electrode material. The ion removal capacity of the apparatus for removal of ions is thereby increased.

A temperature sensor may be provided to measure a temperature of the water just after the capacitor. The temperature of the water may indicate whether de-ionized (warm) water or waste (cold) water is produced by the capacitor. The de-ionized (warm) water may be lead to the purified water outlet 10 and the waste (cold) water may be lead to purified water outlet 16 by the outlet valve V3 on the basis of the temperature of the water from the capacitor.

The ion removal apparatus may be provided with a flow adjuster FA, for example, a pump for adjusting the velocity of the water flowing through the flow through capacitor FTC.

The controller CN may be controlling a power converter PC which may be connected to the first electrodes 13 via the first connector 17 and the current collectors 14a and with the second electrodes 15 via current collectors 14b and second connector 19.

The controller CN controls charging and/or dis-charging of the flow through capacitor FTC and controls the valves V1, V2 and V3. The controller CN may be connected to the temperature sensor.

Once the electrodes of the flow through capacitor become saturated with ions the capacitor may be regenerated by going into the regeneration mode by reducing the applied potential or even reversing the polarity of the electrodes or by shunting the electrical circuit. The energy that is released during the regeneration mode can be recovered and returned to the power source PS. This may help to reduce the overall energy consumption of the apparatus for removal of ions.

The relatively warm water that is de-ionized during the ion removal or purification mode may be at a temperature higher than room temperature, preferably higher than 30°C and more preferably higher than 50 °C. Deionization efficiency increases at higher temperature of the water during the ion removal mode. Figure 2 depicts a graph of how the relative performance gain in terms of flow R of a flow through capacitor system increases as a function of the temperature of the water T. What is shown is that the flow through an FTC can increase by about 40% at a water temperature of 40° Celsius compared to incoming water temperature at circa 12° Celsius at the same purification level.

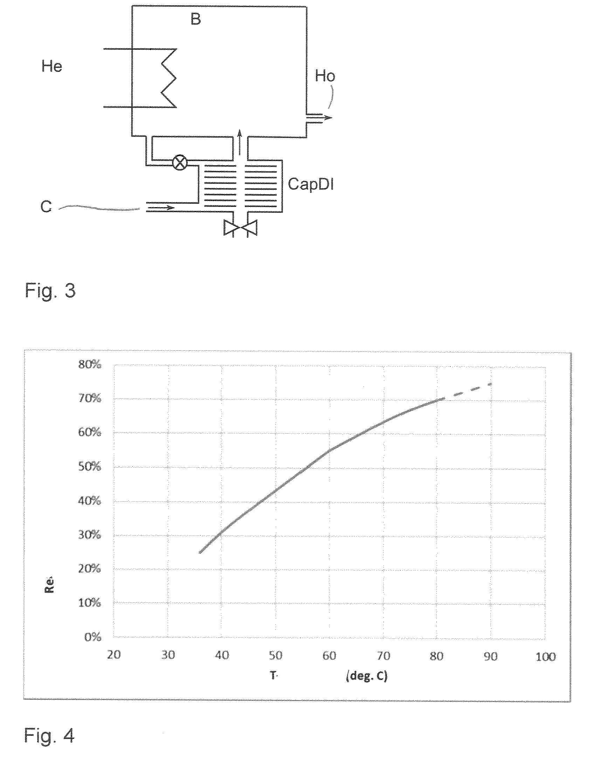

The apparatus for deionizing water may be provided with a boiler B (see figure 3) of more than 100 L, for example. The apparatus may comprise a housing with an arrangement of cells, whereby the volume of the housing is not much larger than the volume taken up by the cells. This can for example be achieved by using a floating electrode.

In case of warm water Ho demand, the cold water inlet is opened and cold water C enters the apparatus CapDI and is deionized to such a degree that the scaling susceptibility (for example expressed as LSI) does not change between the cold feed water C and the deionized, warm boiler water in the boiler B.

The LSI (Langelier saturation index) is a calculated number used to predict the calcium carbonate stability of water. In 1936, Wilfred Langelier developed a method for predicting the pH at which water is saturated in calcium carbonate (called pHs).

The LSI is a measure of the potential of a type of water to scale (or corrode) and is based on the three equilibria below (Eqns 1-3).

$$HCO_3^- \leftrightarrow H^+ + CO_3^{2-} \qquad [1]$$

$$Ca^{2+} + CO_3^{2-} \leftrightarrow CaCO_3 \qquad [2]$$

$$CO_2 + H_2O \leftrightarrow CO_3^{2-} + 2H^+ \qquad [3]$$

where $k_a$ and $k_{sp}$ are equilibrium constants for Eqns 1 and 2 respectively. The LSI is described by [4]:

$$LSI = pH - pH_s \qquad [4]$$

Where $pH_s$ is the saturation pH as mentioned above. Taking the equilibrium constants as a starting point, equations [5] and [6] can be written:

$$k_a = \frac{[H^+]_s \gamma_H + [CO_3^{2-}] \gamma_{CO_3^{2-}}}{[HCO_3^-] \gamma_{HCO_3^-}} \qquad [5]$$

$$k_{sp} = [CO_3^{2-}] \gamma_{CO_3^{2-}} [Ca^{2+}] \gamma_{Ca^{2+}} \qquad [6]$$

k are equilibrium constants, [x] is the species concentration and $\gamma_x$ are activities of the different species. The activities must be included because the solutions under investigation deviate from ideal (dilute) solutions and so there is a dependency on both the solvent (in this case water) and the solute. Rearranging [5] for the concentration of protons at the saturation pH gives [7]:

$$[H^+]_s = \frac{k_a[HCO_3^-]\gamma_{HCO_3^-}}{[CO_3^{2-}]\gamma_{CO_3^{2-}}\gamma_{H^+}}$$  [7]

While rearranging [6] for the carbonate concentration gives [8]:

$$[CO_3^{2-}]\gamma_{CO_3^{2-}} = \frac{k_{sp}}{[Ca^{2+}]\gamma_{Ca^{2+}}}$$  [8]

Substitution of [8] into [7] yields [9]:

$$[H^+]_s = \frac{k_a[HCO_3^-]\gamma_{HCO_3^-}[Ca^{2+}]\gamma_{Ca^{2+}}}{\gamma_{H^+}k_{sp}}$$  [9]

Since $pH_s$ = -$\log_{10}[H^+]_s$ (the same as the pH and [H⁺] relationship), [9] can be simplified and rearranged into [10]

$$pH_s = \log_{10}\left(\frac{k_{sp}\gamma_{H^+}}{k_a\gamma_{Ca^{2+}}\gamma_{HCO_3^-}}\right) - \log_{10}([Ca^{2+}][HCO_3^-])$$  [10]

As mentioned above, the solution deviates from ideality and so the activities must be included. However, even standard tap water is a complex mixture and so it is difficult to measure all of the different ions present and their concentrations and so calculating the activities is also very difficult. The Davies equation,[11] is used to approximate the activity of the solution ([22,23]).

$$\log_{10}\gamma = -0.5\,Z^2\left(\frac{\mu^{0.5}}{1+\mu^{0.5}} - 0.2\mu\right)$$  [11]

where Z is the charge and $\mu$ is the ionic strength which Langelier approximated using [12]:

$$\mu = 2.5 \times 10^{-5}[TDS]$$  [12]

where [TDS] is the total dissolved solids in the solution. The temperature dependence of the rate constants must be accounted for and can be obtained empirically ([24]).
After combination of those equations and simplification, the $pH_s$ can then be calculated according to [13] when [14]-[17] are calculated and include the necessary constants

$$pH_s = (9.3 + A + B) - (C + D)$$  [13]

where

$$A = \frac{\log_{10}[TDS]^{-1}}{10} \qquad [14]$$

$$B = -13.12\log_{10}(T + 273) + 34.55 \qquad [15]$$

$$C = \log_{10}[Ca^{2+}] - 0.4 \qquad [16]$$

$$D = \log_{10}[alkalinity] \qquad [17]$$

Where T is the temperature of the solution in °C and alkalinity is measured as $CaCO_3$ in ppm, $Ca^{2+}$ is measured in ppm while TDS is calculated from the conductivity.

- For LSI > 0, water is super saturated and tends to precipitate a scale layer of $CaCO_3$.
- For LSI = 0, water is saturated (in equilibrium) with $CaCO_3$. A scale layer of $CaCO_3$ is neither precipitated nor dissolved.
- For LSI < 0, water is under saturated and tends to dissolve solid $CaCO_3$.

Water with an LSI between -0.5 and +0.5 will not display enhanced mineral dissolving or scale forming properties. Water with an LSI below -0.5 tends to exhibit noticeably increased dissolving abilities while water with an LSI above +0.5 tends to exhibit noticeably increased scale forming properties.

LSI is temperature sensitive. The LSI becomes more positive as the water temperature increases. The deionization apparatus CapDI deionizes the incoming cold feed water C to such a degree that it may be heated in the boiler B by the heater element He without causing scaling.

Figure 4 shows the required total dissolved solids TDS reduction Re to maintain the scaling susceptibility at increased temperature T. Since the produced deionized water will mix with the already present deionized water in the boiler, the required TDS reduction by the apparatus CapDI will be low (< 50 %), depending on the actual boiler water temperature (e.g. 50-70° Celsius as measured with a sensor), and the volume and quality of softened water already present in the boiler (e.g. as measured with sensors).

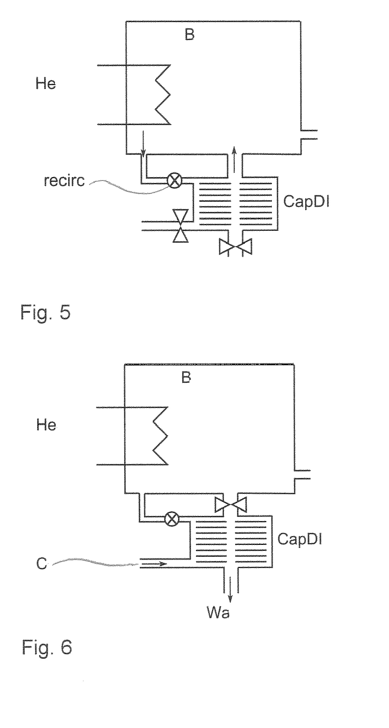

In the boiler B , the water is slowly heated up to the desired temperature using the heater element He. When the boiler B is completely full and or / there is no hot water demand, stage 2 of the process is started and depicted in figure 5, where the cold water line shuts down using a valve and the hot water is recirculated over the CapDI using a pump recirc. The hot water is further deionized to such a level that the corrosion level, as for example measured by the LSI, of the water in the boiler B remains above zero to prevent corrosion. Since the deionization in stage 2 occurs at elevated temperatures, the performance of the apparatus for deionization CapDI is increased, as shown in figure 3. This allows for using only a small apparatus CapDI to produce softened, hot water, as most of the total dissolved (TDS) reduction can be performed in stage 2, as the water is heating up.

After a certain amount of time, the apparatus CapDI is fully saturated with ions and needs to be regenerated. This is done in stage 3, as shown in figure 6. In stage 3, during CapDI regeneration, the hot water recirculation is stopped, and the cold water line C is opened to allow the CapDI to regenerate with cold water. The water flow from the deionization apparatus CapDI to the boiler B is stopped. This allows the regeneration to occur at lower temperatures, where the concentration of scaling ions can be higher before scaling occurs and this therefore allows for less water being wasted and higher water recoveries and for higher water savings. Since the external volume of the module is limited, by for example using a floating stack design or by reducing the dead volume in the module housing, only a limited amount of hot water is wasted down the drain. Waste water is led out of the waste line Wa.

According to an embodiment there is provided a method of operating an apparatus for removal of ions provided with a boiler, the apparatus comprising a capacitor, the method comprising during a boiler fill mode:

allowing relatively cold water to flow in between a first and a second electrode of the capacitor;
charging the capacitor;
removing ions from the relatively cold water by attracting the ions to the first and second electrode;
filling the boiler; and,
heating the water in the boiler; and,

during a recirculation mode:

allowing boiler water heated in the boiler to flow in between the first and a second electrode of the capacitor;
charging the capacitor;
removing ions from the boiler water by attracting the ions to the first and
second electrode; and
recirculating the boiler water to the boiler; and, during a regeneration mode:

allowing relatively cold water to flow in between the first and the second electrode of the capacitor;
de-charging the capacitor; and,
releasing ions from the electrodes in the cold water in between the electrodes.

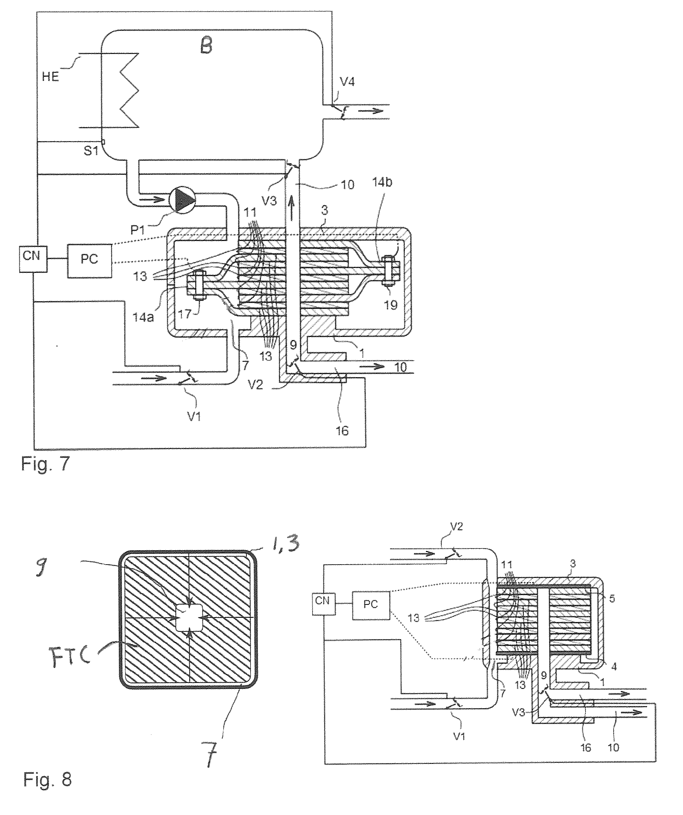

Figure 7 shows an expanded version of figure 3, 5 and 6. Here, the FTC being used is a standard parallel operated module. In figure 7, cold water inlet valve V1 is used to control cold water coming in the apparatus for deionizing water, hot water inlet pump P1 is used to control hot water coming in the module from the boiler B. Purified water outlet V3 and waste water outlet valve V3 is used to switch between regeneration and purification. During recirculation, hot water inlet pump P1 is feeding hot water in the apparatus from the boiler B which after deionization in the FTC is delivered to the boiler B via purified water outlet valve V3. During regeneration, cold water inlet valve V1 is open, giving a waste water stream with cold water coming out of the waste water outlet 10 via waste water outlet valve V2 by closing purified water outlet valve V3. Sensor S1 may be used to measure the temperature and/or the parameters that are needed to calculate the LSI of the boiler water in the boiler B and signal the temperature or the LSI to the controller CN to adjust the heating of the heating element HE and or the deionization of the FTC.

It may be useful to reduce the "dead volume" of the apparatus for removal of ions. Several options are available:

1. Floating FTC stacks, where the electric field is applied over the stack using master electrodes, which allows for a "snug" fit between stack and module housing, eliminating the dead volume. More information with respect to flow through capacitors with a floating stack arrangement can be gleaned from WO2013055220, WO2013055221 and EP2581348 incorporated herein by reference.
2. Filling up the dead space of a standard FTC module with inert material.
3. Operating the module in cross flow, where the FTC module has a separate inlet and outlet for hot and cold water.
4. Wrapping the leads of an FTC stack to minimize area

Figure 8 depicts a top view (on the left) on a cross section of the FTC stack in the housing 1, 3, showing the inlet space 7 between the FTC stack and the housing 1, 3 being minimized. In a floating stack design, the stacks have no leads, but instead are operated using "master electrodes", shown as 4 and 5 in figure 8 (on the right). In a floating stack configuration, the stack can be made "snug fit" to the module housing 1, 3 because the large connector can be omitted. The "dead volume" is thereby decreased.

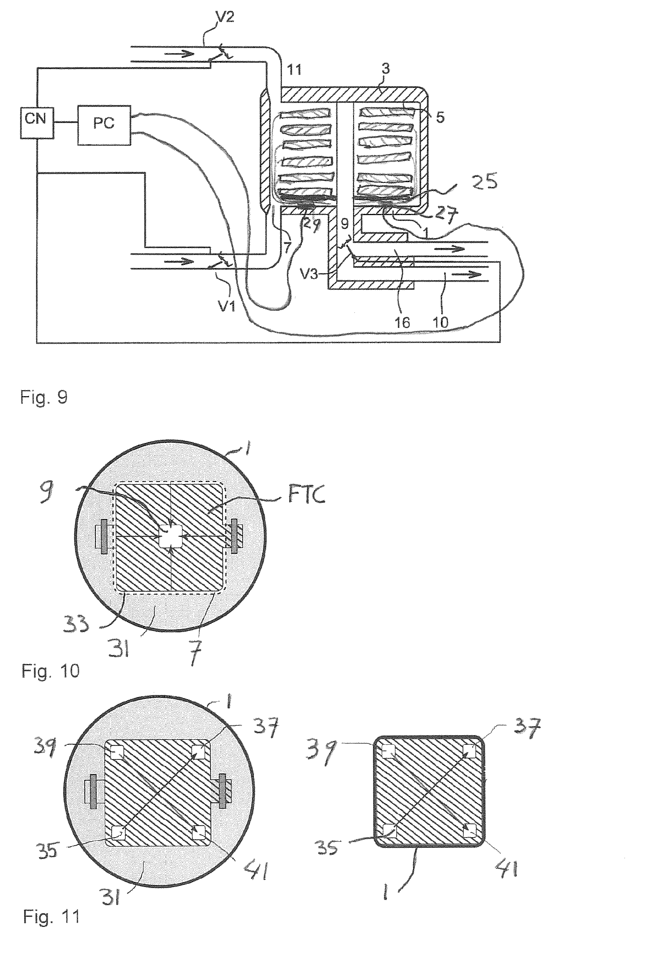

Figure 9 depicts a snug fit for standard (not floating electrodes) FTC modules, which have current leads which are bundled together. This can be done by applying an electrically insulating plate 25 at the bottom of a stack of cells, and wrapping the leads of the cells toward the bottom of this plate. Now the power connections of the stack have been moved from the side of the stack, where they take up a lot of volume, to the bottom of the stack. This can ensure a "snug fit" into the module housing. Power connections can be made by "buttons 27, 29 " in the bottom of the module housing. Additional advantage is that when compressing the stacks from the top, also the button connection is ensured.

Figure 10 depicts a top view on a cross section of an apparatus for removal of ions with a filler 31 to reduce the "dead volume" around the FTC module FTC. One can fill up all the dead space with the filler, for example foam or even sand. However, care must be taken that water can always reach the FTC stack. This can be accomplished by creating a barrier 33 and a flow channel 7 between the filler 31 and the stack FTC it self, in such a way that there always exists a flow path between the barrier 33 and the stack FTC. The barrier 33 and the flow channel 7 can have various variations

• The barrier may be part of a tray in which a FTC stack resides, where each tray connects vertically with other trays and in such a way forming a flow channel from the water inlet to all the individual stacks.
• The barrier may be a combination of two materials, where the material that is put closest to the FTC stack is constructed of a porous material, for example a woven spacer, which acts as the flow channel from the water inlet to all the individual stacks. On the outside of this porous material is a non-porous material which acts as a barrier, preventing water from entering the dead space.
• The barrier may be constructed by first applying a water soluble polymer to the outside of the FTC stacks. Second, the dead space around the module and water soluble polymer is filled up with a non-water soluble component, such as styrofoam, forming the barrier. By flowing water through the stacks the water soluble polymer is dissolved, forming the flow channel.

Figure 11 shows a top view on a cross section of an apparatus for removal of ions using cross flow operation for both a normal FTC configuration (left) as for a floating stack FTC configuration (right). Cross flow operation requires two inlets in a stack and two outlets. The inlets and outlets of each of the stacks align, forming a flow channel running through the entire module. In purification mode, hot water flows from the "warm water inlet 35" to the "warm water outlet 37". In regeneration mode, the hot water flow is stopped, and instead cold water flows from the "cold water inlet 39" to the "cold water outlet 41". The advantage of this operation is that dead volumes are reduced to only the volume that exists in the spacers, as both the hot and the cold water have separate flow channels. In a normal module, the dead volume on the outside of the stack can be filled with a filler 31 to form a barrier, for example with Styrofoam.

For example, a laundry, boiler or dishwasher appliance may comprise an apparatus for removal of ions from water the apparatus being provided with:

a water inlet for letting water in the apparatus;
a water outlet for letting water out of the apparatus;
a capacitor; and,
a spacer for separating a first and a second electrode of the capacitor and allowing water to flow in between the electrodes; wherein the apparatus comprises a water temperature controller constructed and arranged to control during a regeneration mode the temperature of the water to be lower than during an ion removal mode.

According to an alternative embodiment the apparatus for removal of ions may comprise a heater as a temperature controller to control during an ion removal mode the temperature of the water before the water reaches the capacitor to be higher than during a regeneration mode. The water may be heated by the heater such that a connection with warm tap water may be omitted in the apparatus. The apparatus may be kept very compact and multifunctional in this way, combining heating and de-ionization functions.

It is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Furthermore, the terms and phrases used herein are not intended to be limiting, but rather, to provide an understandable description of the invention.

The terms "a" or "an", as used herein, are defined as one or more than one. The term another or subsequent, as used herein, is defined as at least a second or more. The terms including and/or having, as used herein, are defined as comprising (i.e., not excluding other elements or steps). Any reference signs in the claims should not be construed as limiting the scope of the claims or the invention. The mere fact that certain measures are recited in mutually different dependent claims does not indicate that a combination of these measures cannot be used to advantage. The scope of the invention is only limited by the following claims.

**Claims**

1.  A method of operating an apparatus for removal of ions, the apparatus comprising a capacitor, the method comprising during an ion removal mode:

    allowing warm water having a first temperature to flow in between a first and
    a second electrode of the capacitor;
    charging the capacitor; and,
    removing ions from the warm water by attracting the ions to the first and
    second electrode; and,

    during a regeneration mode:

    allowing relatively cold water having a second temperature lower than the first temperature to flow in between the first and the second electrode of the capacitor;
    de-charging the capacitor; and,
    releasing ions from the electrodes into the relatively cold water in between the electrodes.

2.  The method according to claim 1, wherein the relatively cold water is at or below room temperature (25°C).

3. The method according to any of the preceding claims, wherein the relatively warm water is at a temperature higher than room temperature, preferably higher than 30°C and more preferably higher than 40 °C.

4. The method according to any of the preceding claims, wherein the method comprises switching an inlet valve to relatively cold water during the regeneration mode to allow relatively cold water to flow in between the first and the second electrode of the capacitor.

5. The method according to any of the preceding claims, wherein the method comprises switching the inlet valve to relatively warm water during the ion removal mode to allow relatively warm water to flow in between the first and the second electrode of the capacitor.

6. The method according to any of claims 1 to 3 wherein the method comprises heating the water during an ion removal mode to allow relatively warm water to flow in between the first and the second electrode of the capacitor.

7. The method according to any of the preceding claims, wherein the method comprises switching an outlet valve to a purified water outlet during the ion removal mode.

8. The method according to any of the preceding claims, wherein the method comprises switching an outlet valve to a waste water outlet during the regeneration mode.

9. The method according to any of the claims 7 or 8, wherein the method comprises measuring a temperature of the water before the water flows through the outlet valve.

10. The method according to claim 9, wherein the method comprises controlling the valve to direct relatively warm water to a purified water outlet and relatively cold water to a waste water output.

11. The method according to claim 9, wherein the method comprises controlling a regeneration mode only to occur if the measured water temperature is relatively cold.

12. An apparatus for removal of ions from water, the apparatus being provided with:

   a water inlet for letting water in the apparatus;
   a water outlet for letting water out of the apparatus;
   a capacitor; and,
   a spacer for separating a first and a second electrode of the capacitor and allowing water to flow in between the electrodes; wherein the apparatus comprises a water temperature controller constructed and arranged to control during a regeneration mode - in which ions previously attracted to the capacitor are released in a waste water stream - the temperature of the water to be lower than during an ion removal mode - in which ions are attracted to the capacitor -.

13. The apparatus according to claim 12, wherein the water inlet comprises a relatively warm water inlet and a relatively cold water inlet and the temperature controller comprises an inlet valve to switch between water from the relatively warm water inlet and the relatively cold water inlet before the water reaches the capacitor.

14. The apparatus according to claim 12, wherein the temperature controller comprises a heater to control before or during an ion removal mode the temperature of the water before the water reaches the capacitor to be higher than during a regeneration mode.

15. The apparatus according to any of claims 12 to 14, wherein the outlet comprises a purified water outlet and a waste water outlet and the apparatus comprises an outlet valve to switch from the purified water outlet to the waste water output and vice versa.

Fig. 1

Fig. 2

Fig. 3

Fig. 4

EP 2 980 027 A1

Fig. 5

Fig. 6

14

Fig. 7

Fig. 8

Fig. 9

Fig. 10

Fig. 11

| Europäisches Patentamt European Patent Office Office européen des brevets | **EUROPEAN SEARCH REPORT** | **Application Number** EP 14 17 8939 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/263457 A1 (WILKINS FREDERICK C [US] ET AL) 1 December 2005 (2005-12-01) * paragraphs [0031], [0051]; figure 2 * ----- | 12-15 | INV. C02F1/469 |
| X | JP 2002 343689 A (KURITA WATER IND LTD) 29 November 2002 (2002-11-29) * abstract * ----- | 12-15 | |
| X | WO 2013/043053 A1 (STICHTING WETSUS CT OF EXCELLENCE FOR SUSTAINABLE WATER TECHNOLOGY [NL] 28 March 2013 (2013-03-28) * page 2, line 20 - page 3, line 15 * * page 4, line 18 - page 5, line 12 * * page 8, line 17 - page 10, line 23 * ----- | 1-15 | |
| | | | **TECHNICAL FIELDS SEARCHED (IPC)** |
| | | | C02F |

The present search report has been drawn up for all claims

| Place of search | Date of completion of the search | Examiner |
|---|---|---|
| Munich | 28 January 2015 | Borello, Ettore |

**ANNEX TO THE EUROPEAN SEARCH REPORT
ON EUROPEAN PATENT APPLICATION NO.**            EP 14 17 8939

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2015

| Patent document cited in search report | Publication date | Patent family member(s) | Publication date |
|---|---|---|---|
| US 2005263457 A1 | 01-12-2005 | BR PI0511575 A | 02-01-2008 |
| | | CA 2568350 A1 | 15-12-2005 |
| | | CN 101014542 A | 08-08-2007 |
| | | CN 103523934 A | 22-01-2014 |
| | | EP 1751064 A1 | 14-02-2007 |
| | | EP 2772468 A1 | 03-09-2014 |
| | | ES 2505702 T3 | 10-10-2014 |
| | | JP 2008500170 A | 10-01-2008 |
| | | US 2005263457 A1 | 01-12-2005 |
| | | US 2008116136 A1 | 22-05-2008 |
| | | WO 2005118484 A1 | 15-12-2005 |
| | | ZA 200610236 A | 30-09-2009 |
| | | ZA 200804045 A | 25-03-2009 |
| JP 2002343689 A | 29-11-2002 | NONE | |
| WO 2013043053 A1 | 28-03-2013 | EP 2759010 A1 | 30-07-2014 |
| | | NL 2008394 C | 26-03-2013 |
| | | WO 2013043053 A1 | 28-03-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013055220 A
- WO 2013055221 A

- EP 2581348 A